# EUROPEAN PATENT SPECIFICATION

(11) **EP 3 559 460 B1**
(45) Date of publication and mention of the grant of the patent: **18.12.2024**
(21) Application number: 18708046.0
(22) Date of filing: 11.01.2018
(51) Int. Cl.: F03D 80/70

(54) **WIND TURBINE WITH A TUBULAR SUPPORT STRUCTURE AND A BEARING ASSEMBLY**
WINDTURBINE MIT ROHRFÖRMIGER STÜTZSTRUKTUR UND LAGERANORDNUNG
ÉOLIENNE DOTÉE D'UNE STRUCTURE DE SUPPORT TUBULAIRE ET D'UN ENSEMBLE PALIER

(30) Priority: 03.02.2017 DE 102017102135
(43) Date of publication of application: 30.10.2019
(73) Proprietor: Siemens Gamesa Renewable Energy A/S, 7330 Brande (DK)
(72) Inventor: MOESKJAER, Martin, 32801 Orlando, FL (US)
(74) Representative: SGRE-Association
(86) International application number: PCT/EP2018/050631
(87) International publication number: WO 2018/141523

(56) References cited:
- EP-A1- 2 740 928
- US-A1- 2010 219 642
- US-A1- 2012 025 538
- US-A1- 2014 010 655
- US-B1- 6 232 673

## Description

This invention relates to a wind turbine assembly. More particularly, the invention relates to a support structure for supporting the components of the wind turbine.

The wind turbines are gaining wide acceptance due to the recent measures to cut down the carbon emission levels. With the acceptance of wind turbines on such a large scale, there is a need to improve the efficiency of the wind turbines at all levels. The structure of wind turbines need to be very efficient with minimum maintenance costs. It should be ensured that there are no recurring maintenance costs due to structural deficiencies.

Generally, the base support structure is the one which supports critical components of the wind turbine such as a main shaft, a gearbox and a generator. The base support structure is designed for distributing the load to the underlying support structures such as a tower of the wind turbine. The base support structure is traditionally designed to have a flat structure with the components of the wind turbine resting thereon. The flat base support structure is enclosed by a casing. This structure is not efficient in transferring the load effectively to the underlying support structures.

A typical geared nacelle design is based on an open nacelle structure, where the drive train is coupled to the top of the nacelle. The structure is composed of a casting material. Further, provisions are made to accommodate bearing housing and gear box. This structure is effective to some extent but there is scope for improvement regarding structural stability of the open nacelle design. The primary challenge is to achieve a desirable level of stiffness in the structure. In particular, it is desirable to have good torsional and tilt stiffness, which lacks in the current base support structure design.

Until now, this problem is addressed by reinforcing the nacelle by adding additional material. For example, the nacelle may be supported by additional ribs and increased wall thickness. Additionally, the height of the nacelle may be increased for more stiffness. The aforementioned solutions marginally increase the structural integrity of the nacelle. Nacelles in the prior art are described in US 2010/219642, US2012/025538, EP 2740928 and US 6232673.

There is a need for a better design of a base support structure which provides the required structural efficiency for the wind turbine.

Therefore, there is a need for a bearing cover which can be affixed without the need for bolting to the bearing housing. Further, there is a need for a bearing cover which can be coupled very close to the bearing so that foreign particles do not enter the bearing. Furthermore, there is a need for making the bearing cover lighter and easier to fabricate.

In order to achieve the object of the invention, a support structure with a bearing assembly is disclosed according to claims 1-8 is disclosed. The support structure comprises a base, a first aperture, a second aperture and one or more tertiary apertures, a plurality of openings at the base of the support structure. Further, the first aperture comprises a bearing assembly comprising an outer ring and an inner ring, wherein the bearing assembly is coupled to the first aperture using fastening means.

In the invention, the outer ring of the bearing assembly comprises a plurality of bores, the assembly comprising a bearing frame which is coupled to the support structure via the plurality of bores in the outer ring.

The outer ring may be having an increased thickness to accommodate the plurality of bores. The plurality of bores may be adapted to receive a bolting means.

In another aspect of the invention, the bearing assembly is coupled to the first opening via the plurality of bores in the outer ring. The outer ring comprises the plurality of bores along the circumference. In some cases, the plurality of bores may be equidistant from each other. In some other cases, the plurality of bores may be spaced at random distances from each other. However, the plurality of bores are arranged at equidistant from the centre of the bearing assembly.

In yet another aspect of the invention, the thickness of the outer ring of the bearing assembly is higher than that of the inner ring. The thickness of the outer ring is increased in order to accommodate the plurality of bores. The plurality of bores obviates the need of a bearing housing to couple the bearing to the support structure.

In still yet another invention, the fastening means comprises at least one of a bolting means and a welding means.

In yet another aspect of the invention, the plurality of openings at the base of the support structure are configured to accommodate a means for controlling a yaw angle of the wind turbine. For example, the plurality of openings at the base of the support structure may accommodate a motorized unit for controlling the yaw angle of the blades of the wind turbine.

In an aspect of the invention, the support structure is adapted to at least partially enclose a power train, a gearbox and a generator. In an exemplary embodiment, the support structure may completely enclose the power train, the gearbox and the generator.

In a further aspect of the invention, the support structure is composed of an alloy based material. In another embodiment, the support structure may be composed of a composite material.

A wind turbine comprising a support structure in accordance with claims 1-8.

The above mentioned and other features of the invention will now be addressed with reference to the accompanying drawings of the present invention. The illustrated embodiments are intended to illustrated, but not limit the invention.

The present invention is further described hereinafter with reference to illustrated embodiments shown in the accompanying drawings, in which:
- FIG 1: illustrates a perspective view of a support structure for use in a wind turbine, in accordance with an embodiment;
- FIG 2: illustrates a perspective view of the support structure for use in a wind turbine with a main shaft and associated components, in accordance with an embodiment;
- FIG 3: illustrates a perspective view of the support structure with a bearing frame, in accordance with an embodiment; and
- FIG 4: illustrates a cross sectional view of the support structure with the bearing frame, in accordance with an embodiment.

Various embodiments are described with reference to the drawings, wherein like reference numerals are used to refer like segments throughout. In the following description, for the purpose of explanation, numerous specific details are set forth in order to provide thorough understanding of one or more embodiments. It may be evident that such embodiments may be practiced without these specific details.

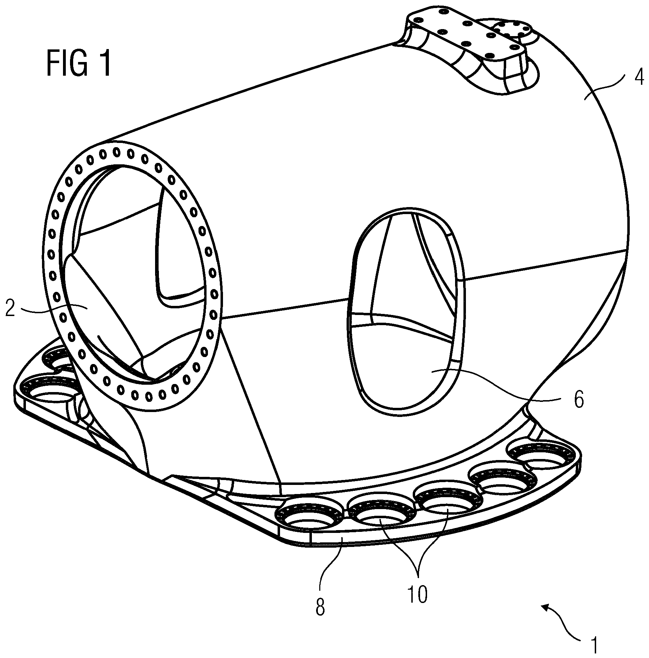

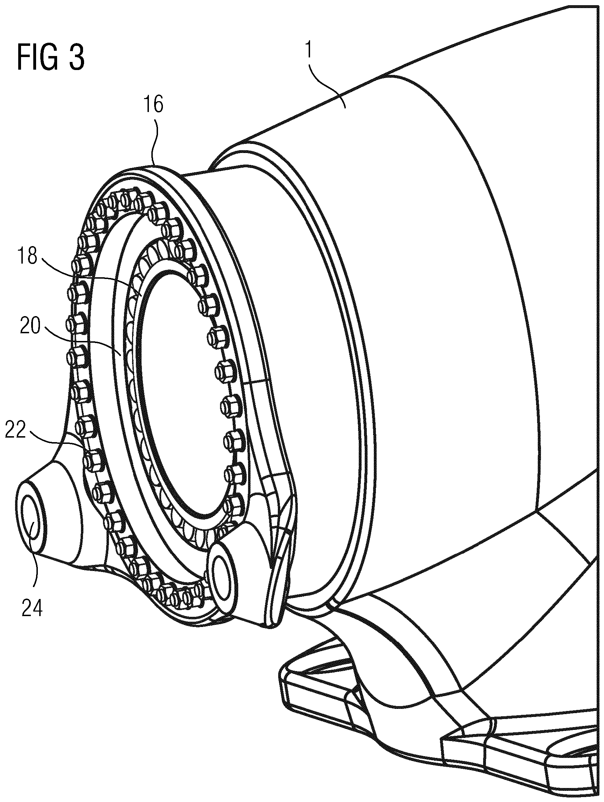

FIG 1 illustrates a perspective view of a support structure 1 for use in a wind turbine, in accordance with an embodiment. The support structure 1 includes a first aperture 2, a second aperture 4, one or more tertiary apertures 6 and a plurality of openings 10 at the base of the support structure 1. The first aperture 2 may be coupled to a main shaft. Further, the first aperture may accommodate a bearing frame. The features of the bearing frame are explained in detail in conjunction with FIG 3. The second aperture 4 may accommodate a rear portion of the main shaft of the wind turbine. The tertiary aperture 6 may aid in circulation of air within in the support structure 1. Further, the plurality of openings 10 at the base of the support structure 1 may be used for accommodating one or more means for controlling a yaw angle of the wind turbine.

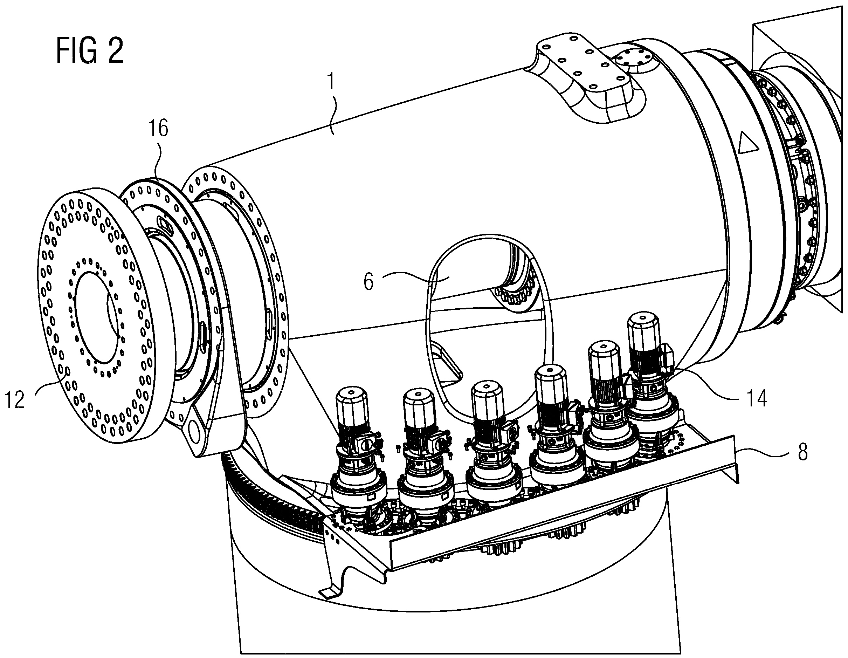

FIG 2 illustrates a perspective view of the support structure 1 for use in a wind turbine with a main shaft 12 and associated components, in accordance with an embodiment. The main shaft 12 is assembled within the support structure 1. As shown in FIG 2, the main shaft 12 may be arranged horizontally within the support structure 1. The horizontal central axes of the support structure 1 and the main shaft 12 may coincide. The main shaft 12 may further connect to a drive.

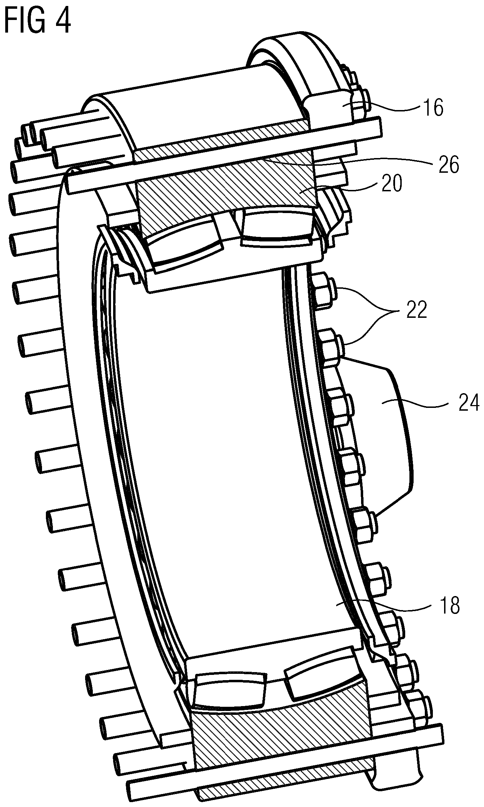

Additionally, a bearing frame 16 is coupled to the first aperture 2 of the support structure 1. The bearing frame 16 is coupled to the support structure 1 via a bearing assembly (shown in FIG 3). The main shaft 12 passes through the bearing assembly for facilitating rotation. Further details associated with coupling the bearing frame 16 to the first aperture 2 is described in conjunction with FIG 4. The plurality of openings 10 at the base of the support structure 1 is configured for receiving a means for controlling the yaw angle of the wind turbine.

FIG 3 illustrates a perspective view of the support structure 1 with a bearing frame 16, in accordance with an embodiment. As shown in FIG 3, the bearing frame 16 is coupled to the first aperture 2 of the support structure 1. The bearing frame 16 may be coupled to the first aperture 2 via an outer ring 20 of the bearing assembly. The outer ring 20 of the bearing assembly includes a plurality of bores 26 which are configured to receive a fastening means 22. For example, the fastening means 22 may include a bolting means, a magnetic means and a welding means. The bearing frame 16 further includes connecting points 24 which can be used for connecting parts of the wind turbine.

FIG 4 illustrates a cross sectional view of the support structure 1 with the bearing frame 16, in accordance with an embodiment. In the cross sectional view, it can be seen that the outer ring 20 of the bearing assembly includes a plurality of bores 26. The bearing frame 16 is coupled to the outer ring 20 of the bearing assembly through the plurality of bores 26. In this arrangement, the need for a bearing housing is eliminated. The outer ring 20 of the bearing assembly aids in providing the necessary support for the the bearing frame 16 to clench the first aperture of the support structure 1.

The advantageous embodiments disclosed herein enable an improved design of the support structure 1 to accommodate the components of the wind turbine. The support structure 1 as disclosed herein enables a strong and stable structure with reduced costs. The support structure 1 described herein further has a closed structure unlike the prior art support structures which are open type. The closed structure of the support structure 1 enables significant gain in stiffness for both tilt and torsional loads. Further, the tubular structure provides natural stiffness gain without using walls of high thickness thus reducing the weight and the cost of the support structure 1. The design of the support structure 1 enables uniform support for both the bearing assembly and the main shaft. The support structure 1 is configured to offer a distributed support to the components all around the circumference instead of the traditional point support. Further, there is no need of a bearing housing in the disclosed design of the support structure 1. The outer ring 20 of the bearing assembly is configured to include plurality of bores 26 to couple a bearing frame 16 to the support structure 1. The aforementioned design leads to reduced costs, fewer components and simpler assembly.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description.

### List of Reference Signs

- 1: Support structure
- 2: First aperture
- 4: Second aperture
- 6: Tertiary apertures
- 8: Base of the support structure
- 10: Plurality of openings
- 12: Main shaft of wind turbine
- 14: Means for controlling the yaw angle
- 16: Bearing frame
- 18: Inner ring of the bearing assembly
- 20: Outer ring of the bearing assembly
- 22: Fastening means
- 24: Connecting points
- 26: Plurality of bores through the outer ring

## Claims

1. Assembly comprising a support structure (1) of a wind turbine and a bearing assembly, wherein the support structure (1) has a tubular structure and comprises:
a base (8);
a first aperture (2), a second aperture (4) and one or more tertiary apertures (6), wherein the first aperture (2) and the second aperture (4) are each located on opposing sides of the base (8);
a plurality of openings (10) at the base (8) of the support structure, wherein the bearing assembly comprises an outer ring (20) and an inner ring (18),
**characterized in that** the outer ring (20) is axially coupled to the rim of the first aperture (2), wherein the outer circumferential surface of the outer ring (20) is exposed in radial direction, wherein the outer ring (20) of the bearing assembly comprises a plurality of bores (26), wherein the assembly comprises a bearing frame (16), wherein the bearing frame (16) is coupled to the support structure (1) via the plurality of bores (26) in the outer ring (20) .

2. Assembly according to claim 1, wherein the outer ring (20) of the bearing assembly is coupled to the first aperture (2) using a fastening means.

3. Assembly according to one of the preceding claims, wherein the thickness of the outer ring (20) of the bearing assembly is higher than that of the inner ring (18) .

4. Assembly according to one of the preceding claims, wherein the fastening means (22) comprises at least one of a bolting means and a welding means.

5. Assembly according to one of the preceding claims, wherein the plurality of openings (10) at the base (8) of the support structure (1) are configured to accommodate a means (14) for controlling a yaw angle of the wind turbine.

6. Assembly according to claim 5, wherein the means of controlling the yaw angle is a motorized unit.

7. Assembly according to one of the preceding claims, wherein the support structure (10) is adapted to at least partially enclose a main shaft (12), a gearbox and a generator.

8. Assembly according to one of the preceding claims, wherein the support structure (1) is composed of an alloy based material.

9. A wind turbine comprising an assembly according to one of the preceding claims.

## Patentansprüche

1. Anordnung, umfassend eine Stützstruktur (1) einer Windturbine und eine Lageranordnung, wobei die Stützstruktur (1) eine rohrförmige Struktur aufweist und Folgendes umfasst:
eine Basis (8);
eine erste Öffnung (2), eine zweite Öffnung (4) und eine oder mehrere tertiäre Öffnungen (6), wobei die erste Öffnung (2) und die zweite Öffnung (4) jeweils auf einander gegenüberliegenden Seiten der Basis (8) befindlich sind;
mehrere Durchgangsöffnungen (10) an der Basis (8) der Stützstruktur, wobei die Lageranordnung einen äußeren Ring (20) und einen inneren Ring (18) umfasst, **dadurch gekennzeichnet, dass** der äußere Ring (20) axial mit dem Rand der ersten Öffnung (2) gekoppelt ist, wobei die äußere umlaufende Oberfläche des äußeren Rings (20) in radialer Richtung freiliegt, wobei der äußere Ring (20) der Lageranordnung mehrere Bohrungen (26) umfasst, wobei die Anordnung einen Lagerrahmen (16) umfasst, wobei der Lagerrahmen (16) über die mehreren Bohrungen (26) im äußeren Ring (20) mit der Stützstruktur (1) gekoppelt ist.

2. Anordnung nach Anspruch 1, wobei der äußere Ring (20) der Lageranordnung unter Verwendung eines Befestigungsmittels mit der ersten Öffnung (2) gekoppelt ist.

3. Anordnung nach einem der vorhergehenden Ansprüche, wobei die Dicke des äußeren Rings (20) der Lageranordnung höher als die des inneren Rings (18) ist.

4. Anordnung nach einem der vorhergehenden Ansprüche, wobei das Befestigungsmittel (22) zumindest eines aus einem Schraubmittel und einem Schweißmittel umfasst.

5. Anordnung nach einem der vorhergehenden Ansprüche, wobei die mehreren Durchgangsöffnungen (10) an der Basis (8) der Stützstruktur (1) ausgelegt sind zum Aufnehmen eines Mittels (14) zum Steuern eines Gierwinkels der Windturbine.

6. Anordnung nach Anspruch 5, wobei das Mittel zum Steuern des Gierwinkels eine motorisierte Einheit ist.

7. Anordnung nach einem der vorhergehenden Ansprüche, wobei die Stützstruktur (10) dazu angepasst ist, eine Hauptwelle (12), ein Getriebe und einen Generator zumindest teilweise einzuschließen.

8. Anordnung nach einem der vorhergehenden Ansprüche, wobei die Stützstruktur (1) aus einem legierungsbasierten Material zusammengesetzt ist.

9. Windturbine, umfassend eine Anordnung nach einem der vorhergehenden Ansprüche.

## Revendications

1. Ensemble comprenant une structure de support (1) d'une éolienne et un ensemble palier, dans lequel la structure de support (1) a une structure tubulaire et comprenant :
une base (8) ;
une première ouverture (2), une seconde ouverture (4) et une ou plusieurs ouvertures tertiaires (6), dans lequel la première ouverture (2) et la seconde ouverture (4) sont chacune situées sur des côtés opposés de la base (8) ;
une pluralité d'ouvertures (10) au niveau de la base (8) de la structure de support, dans lequel l'ensemble palier comprend une bague extérieure (20) et une bague intérieure (18), **caractérisé en ce que** la bague extérieure (20) est couplée axialement au bord de la première ouverture (2), dans lequel la surface circonférentielle externe de la bague extérieure (20) est exposée dans la direction radiale, dans lequel la bague extérieure (20) de l'ensemble palier comprend une pluralité d'alésages (26), dans lequel l'ensemble comprend un cadre de palier (16), dans lequel le cadre de palier (16) est couplé à la structure de support (1) via la pluralité d'alésages (26) dans la bague extérieure (20).

2. Ensemble selon la revendication 1, dans lequel la bague extérieure (20) de l'ensemble palier est couplée à la première ouverture (2) à l'aide d'un moyen de fixation.

3. Ensemble selon l'une des revendications précédentes, dans lequel l'épaisseur de la bague extérieure (20) de l'ensemble palier est supérieure à celle de la bague intérieure (18).

4. Ensemble selon l'une des revendications précédentes, dans lequel le moyen de fixation (22) comprend au moins un parmi un moyen de boulonnage et un moyen de soudage.

5. Ensemble selon l'une des revendications précédentes, dans lequel la pluralité d'ouvertures (10) à la base (8) de la structure de support (1) sont configurées pour accueillir un moyen (14) pour commander un angle de lacet de l'éolienne.

6. Ensemble selon la revendication 5, dans lequel le moyen de commande de l'angle de lacet est une unité motorisée.

7. Ensemble selon l'une des revendications précédentes, dans lequel la structure de support (10) est adaptée pour enfermer au moins partiellement un arbre principal (12), une boîte de vitesses et un générateur.

8. Ensemble selon l'une des revendications précédentes, dans lequel la structure de support (1) est composée d'un matériau à base d'alliage.

9. Éolienne comprenant un ensemble selon l'une des revendications précédentes.
